(19) Europäisches Patentamt / European Patent Office / Office européen des brevets

(11) **EP 4 572 967 B1**

(12) **EUROPEAN PATENT SPECIFICATION**

(45) Date of publication and mention of the grant of the patent:
**13.05.2026  Bulletin 2026/20**

(21) Application number: **23750734.8**

(22) Date of filing: **14.07.2023**

(51) International Patent Classification (IPC):
**B60K 23/08** $^{(2006.01)}$      **B60K 5/02** $^{(2006.01)}$
**B60K 17/346** $^{(2006.01)}$

(52) Cooperative Patent Classification (CPC):
**B60K 23/0808; B60K 5/02; B60K 17/02;**
**B60K 17/344;** B60K 17/046; B60K 17/28;
B60K 17/356; B60K 2023/0825; B60Y 2200/221;
F16H 2047/025; F16H 2047/045

(86) International application number:
**PCT/IB2023/057212**

(87) International publication number:
**WO 2024/038333 (22.02.2024 Gazette 2024/08)**

(54) **VEHICLE WITH CONTROLLABLE CLUTCH BETWEEN FRONT AND REAR AXLE AND METHOD FOR CONTROLLING VARIABLE CLUTCH ENGAGEMENT RATIO OF THE CLUTCH**

FAHRZEUG MIT STEUERBARER KUPPLUNG ZWISCHEN VORDER- UND HINTERACHSE UND VERFAHREN ZUR STEUERUNG DES VARIABLEN KUPPLUNGSEINRÜCKVERHÄLTNISSES DER KUPPLUNG

VÉHICULE À EMBRAYAGE POUVANT ÊTRE COMMANDÉ ENTRE UN ESSIEU AVANT ET UN ESSIEU ARRIÈRE ET PROCÉDÉ DE COMMANDE DE RAPPORT DE MISE EN PRISE D'EMBRAYAGE VARIABLE DE L'EMBRAYAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **15.08.2022  GB 202211882**
         **13.09.2022  GB 202213322**

(43) Date of publication of application:
**25.06.2025  Bulletin 2025/26**

(73) Proprietor: **AGCO International GmbH**
**8212 Neuhausen am Rheinfall (CH)**

(72) Inventors:
 • **ABEL, Manuel**
  **87616 Marktoberdorf (DE)**

 • **HEINDL, Richard**
  **87616 Marktoberdorf (DE)**
 • **GEIGER, Markus**
  **87616 Marktoberdorf (DE)**

(74) Representative: **AGCO Intellectual Property Department**
**AGCO Limited**
**Abbey Park Stoneleigh**
**Kenilworth CV8 2TQ (GB)**

(56) References cited:
EP-A2- 1 415 850        EP-B1- 3 720 760
WO-A1-2013/053564       DE-U1- 9 204 417
US-A- 5 752 211         US-A1- 2007 060 434
US-A1- 2021 163 064

## Description

### FIELD

The present invention relates generally to a vehicle with a controllable clutch between front and rear axle having a variable clutch engagement ratio and a method for controlling the variable clutch engagement ratio of the clutch.

### BACKGROUND

Vehicles with an all-wheel drive may have a common drive shaft for transmitting a drive torque provided by an engine to the drive front and rear wheels of the vehicle. Depending on the conditions of the ground the wheels are rolling on, a different torque may be transferrable by the wheels. For example, low torque may be transferrable on icy ground only instead of a higher torque if the ground is rough. Thus, it may be useful to distribute the drive torque between the front and rear wheels if front wheels are on a ground having a different condition than the rear wheels so that the wheels rolling on the ground with the better condition can transfer higher torque. The torque distribution may be provided by a controllable clutch integrated in the drive shaft between the front and rear wheels.

EP 3 720 076 B1 discloses a drive system for a utility vehicle such as a tractor with an engine and a transmission to drive a front axle and a rear axle. A clutch is arranged between the front axle and the rear axle to vary the distribution of delivered torque between the front and rear axles. The clutch may be engaged if a speed difference between the front axle and the rear axle exceeds a threshold value having a fixed value. Thus, skidding of the wheels may be prevented.

### BRIEF SUMMARY

It is an objective to improve vehicle dynamics of a vehicle having a drive system with a controllable clutch between a front axle and a rear axle for varying the distribution of torque between the two axles.

According to an aspect of the invention there is provided a vehicle comprising a drive system for generating a drive torque and transmitting the drive torque to a front axle drive output shaft and a rear axle drive output shaft with a controllable clutch arranged between the front axle drive output shaft and the rear axle drive output shaft for distributing the drive torque between the front axle drive output shaft and the rear axle drive output shaft according to a clutch engagement ratio, a first speed sensor for determining a rotational speed of the front axle drive output shaft, a second speed sensor for determining a rotational speed of the rear axle drive output shaft, a measuring unit for determining a pull force, and a control unit configured to determine a speed difference between the rotational speed of the front axle drive output shaft and the rotational speed of the rear axle drive output shaft, to determine a first threshold value based on the pull force, to set the first threshold value as an active threshold value, and to control the clutch engagement ratio of the controllable clutch in dependence on the speed difference and the active threshold value.

The active threshold value defines a threshold value for the speed difference. When the first threshold value is set as the active threshold value, the value of the first threshold value defines the threshold value for the speed difference. The control unit may compare the speed difference with the active threshold value, which may be the first threshold value, and may detect if the speed difference exceeds or undercuts the active threshold value.

The clutch engagement ratio defines the level of engagement of the controllable clutch that may continuously vary from fully released (also disengaged) to fully engaged. When the controllable clutch is fully released, the front axle drive output shaft and the rear axle drive output shaft may rotate independently from each other such as two disconnected axles. When the controllable clutch is fully engaged, the front axle drive output shaft and the rear axle drive output shaft may rotate together such as an one-piece axle. In case of any intermediate clutch engagement ratio, drive torque is distributed between both axles accordingly.

The vehicle may be any utility vehicle or agricultural machine such as a tractor, a harvester or a combine, for example. The vehicle may be used to pull a tool or an implement over a ground, e. g. an agricultural field, to perform a task as for example ploughing the agricultural field or transport an object. Depending on the task to be performed a different pull force may be required to be provided by the vehicle to overcome with the load caused by resistance forces. For example, ploughing a field may require much more pull force to be provided by the vehicle as driving on a road because of the much higher resistance forces cause by the field operation increasing the load accordingly.

The pull force provided by the vehicle may be determined by the control unit processing appropriate sensor values. The sensor values may be determined by the measuring unit for determining a pull force. For example, the pull force may depend on a pressure value of a fluid in a hydraulic line of a component of the drive system. The measuring unit for determining a pull force may be a pressure sensor connected with the hydraulic line of the component of the drive system. Then, the pull force may be indirectly determined based on a pressure value provided by the pressure sensor. Based on the pull force, the first threshold value may be determined. Thus, the first threshold value depends on the pull force and may vary accordingly when the pull force increases or decreases instead of a constant or fixed threshold value.

Due to the variability of the first threshold value, the engagement level of the controllable clutch may be adapted to the pull force resulting in improved vehicle dynamics. Additionally, stress in the drive system caused by an insufficient distribution of driving torque by the controllable clutch may be reduced to increase lifetime of the vehicle components.

The control unit may be configured to normalize the rotational speed of the front or the rear axle drive output shaft in respect of a lead ratio, a steering angle of steerable wheels and/or dimensions of front and rear wheels.

Since each wheel of the vehicle may rotate with an individual rotational speed a comparison of the rotational speeds of the front and rear axle or of the rotational speeds the front and rear axle drive output shafts which are connected to the front and rear axles is not intuitive. The individual speeds may depend on several constraints as for example the lead ratio, the steering angle and the impact of the Ackermann steering geometry and different dimensions (in terms of the outer diameter) of the wheels. But the lead ratio, the steering angle and the different dimensions of the wheels may be parametrizable and may be determined by the control unit. Thus, the constraints may be compensated for determining a normalized rotational speed of the front axle, the rear axle, the rear axle drive output shaft and the front axle drive output shaft by the control unit. As a result, a deviation of the rotational speed of the front and rear axle or of the front and rear axle drive output shaft may be determined without the impact of the constraints mentioned above. In addition, an abnormal driving situation may be determined by the control unit if a difference between the normalized rotational speed of the front and the rear axle or between the front and rear axle drive output shaft is too high.

The higher the pull force is, the lower the value of the first threshold value may be determined by the control unit, and vice versa.

I. e., the higher the pull force is, a smaller speed difference between the front and rear axle may be sufficient so that the control unit engages the controllable clutch for adjusting the clutch engagement ratio. The first threshold value may be determined based on a characteristic out of a set of different characteristics. The higher the pull force is a characteristic having a lower threshold value is selected out of the set of characteristics for the first threshold value. Alternatively, the first threshold value may be determined by the control unit based on a look-up table stored in a memory of the control unit. Again, the first threshold value may be adjusted to the pull force accordingly. Thus, the first threshold value may be adapted to improve the traction or the transferable torque of the wheels since the pull force may influence the traction of the vehicle and the transferable torque.

The control unit may be configured to determine the first threshold value based on the rotational speed of the front axle drive output shaft or the rear axle drive output shaft.

The rotational speed of the front and the rear axle drive output shaft depends on the vehicle speed having impact on the driving behavior. If one of the axles rotates faster than expected for the vehicle speed the wheels driven by this axle drive output shaft may skid. Thus, the first threshold value may be determined to improve the driving behavior if the rotational speed of the front axle drive output shaft or the rear axle drive output shaft is considered. The control unit may consider the rotational speed of one of both axle drive output shafts or of both axle drive output shafts. A high difference of the rotational speeds of the front and the rear axle drive output shafts may also cause damage to the drive system if the variable clutch engagement ratio is too high. Thus, a damage may be prevented if the rotational speed of one of both axle drive output shafts or of both axle drive output shafts is considered for the first threshold value.

The driving behavior may have impact on the driving stability of the vehicle. Thus, an improvement of the driving behavior may be used to improve the driving stability of the vehicle.

The control unit may be configured to determine at least one additional threshold value and to set the additional threshold value as the active threshold value if the first threshold value is below the additional threshold value.

The at least one additional threshold value may depend from other or additional parameters than the first threshold value. Thus, the controllable clutch may be controlled based on additional or other states than the pull force and the rotational speed of one of the axle drive output shafts as considered for the first threshold value. But the control unit may consider a threshold value other than the first threshold value if the impact of the at least one additional threshold value on the driving behavior is greater than the impact of the first threshold value.

The control unit may be configured to determine a lead ratio, and to determine a second threshold value as one of the at least one additional threshold value if the determination of the lead ratio is void wherein the second threshold value may be based on the rotational speed of the front axle drive output shaft or the rear axle drive output shaft.

Thus, as long as the influence of the lead ratio on the vehicle dynamics is unknown the control unit determines the second threshold value for considering uncertainties due to the unknown parameter. The second threshold value may be based on the rotational speed of the front axle drive output shaft or the rear axle drive output shaft similar to the first threshold value but considering an additional tolerance range for improving the driving behavior. The second threshold value may also depend on the pull force similar to the first threshold value. The second threshold value may be set to zero if the pull force increases a pull force threshold.

The vehicle may comprise a brake unit, a steerable wheel, and a steering sensor for determining a steering angle of the steerable wheel wherein the control unit determines the lead ratio if the pull force may be below a first parameter, the steering angle may be below a second parameter, the brake unit may be released, and/or the clutch engagement ratio of the controllable clutch may be below a third parameter.

The determination of the lead ratio may be falsified if the state of the vehicle is not applicable for the determination. For example, driving a curve or braking the vehicle may have a negative impact on the determination of the lead ratio. Thus, it is advantageous for the determination of the lead ratio if the vehicle is driving straight on, if the pull force is not too high, if the vehicle is not decelerated and if the controllable clutch is disengaged. If the control unit detects that such a vehicle state is present it starts the determination of the lead ratio.

The control unit may be configured to determine the second threshold value as a constant value after a valid determination of the lead ratio.

I. e., the second threshold value may be independent from the rotational speed of the front or rear axle drive output shaft or of the pull force or of any other parameter after a valid determination of the lead ratio. For example, the second threshold may be set to zero if the lead ratio has been determined so that the second threshold value is constantly below the first threshold value. Otherwise, the control unit may determine a second threshold value that is higher than the first threshold value if the lead ratio hasn't been determined yet so that the second threshold value can be set as the active threshold value.

The control unit may be configured to detect a brake steering action, and to determine a third threshold value as one of the at least one additional threshold value in dependence on a detection of a brake steering action.

A brake steering action, i. e. braking and steering a vehicle simultaneously, may have a great impact on the driving behavior. Thus, the control unit may determine a separate threshold value for this specific vehicle state. The third threshold value may be higher than the first threshold value so that the third threshold value can be set as the active threshold value if a brake steering action is present. The third threshold value may also be higher than the second threshold value so that the third threshold value can be set as the active threshold value in any case if a brake steering action is present. Thus, the variable clutch engagement ratio of the controllable clutch may be adjusted in dependence on the third threshold value to improve the driving behavior in case of a brake steering action. The third threshold value may also depend on the front or the rear axle drive output shaft. The third threshold value may be determined based on a characteristic or a look-up table.

The control unit may be configured to determine a maximum threshold value out of the first threshold value and the at least one additional threshold value and to set the maximum threshold value as the active threshold value.

Hence, the control unit may select the one threshold value having the greatest impact on the driving behavior as the active threshold value. The control unit may compare the first threshold value and all other additional threshold values with each other to determine the threshold value having the highest value. The threshold value having the highest value may be set as active threshold value. The second and the third threshold value may be used as the additional threshold values.

The control unit may be configured to compare the speed difference with the active threshold value and to adjust the clutch engagement ratio of the controllable clutch to reduce the speed difference.

The control unit may increase the clutch engagement ratio to continuously engage the clutch. The more the clutch is engaged the more torque is distributed between the front and the rear axle drive output shaft so that the rotational speeds of the front and the rear axle drive output shaft may equalize more and more. The active threshold value is determined by the control unit and may be the maximum threshold value as for example the first, the second or the third threshold value.

The control unit may be configured to reduce the speed difference if the speed difference exceeds the active threshold value.

I. e., as long as the speed difference is below the active threshold value the control unit may not increase the clutch engagement ratio. But if the active threshold value may be exceeded the clutch engagement ratio may be increased until the speed difference falls below the active threshold value again. Optionally, the clutch engagement ratio may be increased until the speed difference between the front and the rear axle drive output shaft is balanced.

The control unit may be configured to reduce the clutch engagement ratio if the speed difference is below the active threshold value.

Thus, the controllable clutch may be disengaged more and more as long as the speed difference is below the active threshold value. The more the clutch is disengaged the less torque is distributed between the front and the rear axle drive output shaft. The controllable clutch may be fully disengaged if the speed difference remains below the active threshold value. Then, the front axle drive output shaft and the rear axle drive output shaft may rotate completely independently from each other.

The control unit may be configured to determine a lead ratio and to detect a brake steering action and to set the first threshold value as the active threshold value only if the lead ratio has been validly determined and an absence of a brake steering action has been detected.

The lead ratio may be determined as described above. The absence of the brake steering action may be detected by the control unit if the signal of the steering sensor is below a threshold value representing a straight forward driving or if the brake units are not applied so that the vehicle is not decelerated. The brake units may send a corresponding signal if they are not applied. I. e., as long as the control unit detects a brake steering action the control unit doesn't set the first threshold value as the active threshold value.

The first threshold value may be equal or below 5% of the normalized rotational speed of the front or rear axle drive output shaft.

The lower the first threshold value is the less speed difference between the front and the rear axle drive output shaft is required for exceeding the first threshold value. The first threshold value may vary according to the set of characteristics as described above. For example, one characteristic of the set may be limited to 5% of the normalized rotational speed of the front or rear axle drive output shaft. A second characteristic of the set may be limited to 4% of the normalized rotational speed of the front or rear axle drive output shaft. A third characteristic of the set may be limited to 3% of the normalized rotational speed of the front or rear axle drive output shaft, and so on. Optionally, the first threshold value may be based on the normalized rotational speed of the rear axle drive output shaft only.

The at least one additional threshold value may be higher than 5% of a normalized rotational speed of the front or rear axle drive output shaft.

The higher the at least one threshold value is the more speed difference between the front and the rear axle drive output shaft is required for exceeding the at least one additional threshold value. The at least one additional threshold value may comprise the second or the third threshold value or both or any other additional threshold value. For example the third threshold value may be between 15% and 20% of the normalized rotational speed of the front or rear axle drive output shaft. The second threshold value may be for example between 5% and the third threshold value. Optionally, the second and/or the third threshold value may be based on the normalized rotational speed of the rear axle drive output shaft only.

According to another aspect of the invention there is provided a method for controlling a variable clutch engagement ratio of a first controllable clutch of a vehicle comprising the steps of determining a rotational speed value of a front axle drive output shaft connected with the first controllable clutch, determining a rotational speed value of a rear axle drive output shaft connected with the first controllable clutch, determining a normalized rotational speed value of the rear axle drive output shaft, determining a speed difference between the rotational speed value of the front axle drive output shaft and the normalized rotational speed value of the rear axle drive output shaft, determining a pull force of the vehicle, determining a first threshold value based on the normalized rotational speed value of the rear axle drive output shaft and the pull force, comparing the speed difference with the first threshold value, and increasing the clutch engagement ratio if the speed difference exceeds the first threshold value to reduce the speed difference.

As mentioned above, the pull force may be determined indirectly by usage of a pressure sensor. Since the determination of the first threshold value is based on the pull force the driving behavior of the vehicle may be improved by avoid skidding of the wheels. The higher the pull force is the lower the first threshold value may be. The level of engagement of the controllable clutch may vary according to the clutch engagement ratio. If the clutch engagement ratio increases the controllable clutch is engaged more and more. Otherwise, if the clutch engagement ratio decreases the controllable clutch is released (disengaged) more and more.

The method may optionally comprise the steps of determining a second threshold value in dependence on a determination of a lead ratio, determining a third threshold value in dependence on a brake steering action, determining a maximum threshold value out of the first, second and third threshold values and setting the maximum threshold value as the active threshold value.

Thus, the control unit may determine several threshold values and may set the one threshold value having the greatest impact on the driving behavior of the vehicle as the active threshold value. Each of the first, second and third threshold value may depend on a different condition such as the value of the pull force, the determination of the lead ratio and the determination of a brake steering action. Depending on which of these conditions causes the greatest impact the control unit may set the first, the second or the third threshold value as the maximum threshold value and thus as the active threshold value accordingly.

## BRIEF DESCRIPTION OF THE DRAWINGS

Several aspects of the invention will now be described, by way of example only, with reference to the accompanying drawings, in which:

FIG. 1 illustrates an utility vehicle, in the form of a tractor.
FIG. 2 is a simplified view of a control unit of the vehicle shown in FIG. 1;
FIG. 3 is a schematic representation of a drive system of the tractor of FIG. 1;
FIG. 4 illustrates flow diagram.
FIG. 5A illustrates a set of characteristics for a first threshold value.
FIG. 5B illustrates a characteristic for a second threshold value.
FIG. 5C illustrates a characteristic for a third threshold value.

## DETAILED DESCRIPTION

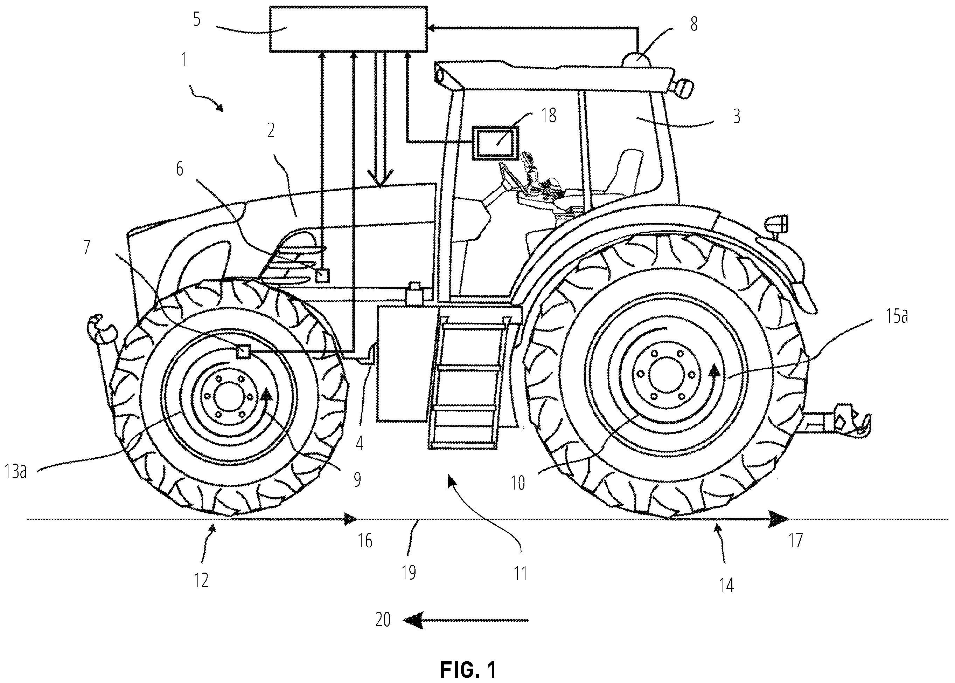

Referring to FIG. 1, a utility vehicle 1 in the form of a tractor is shown having a cab 3 and an engine compartment 2.

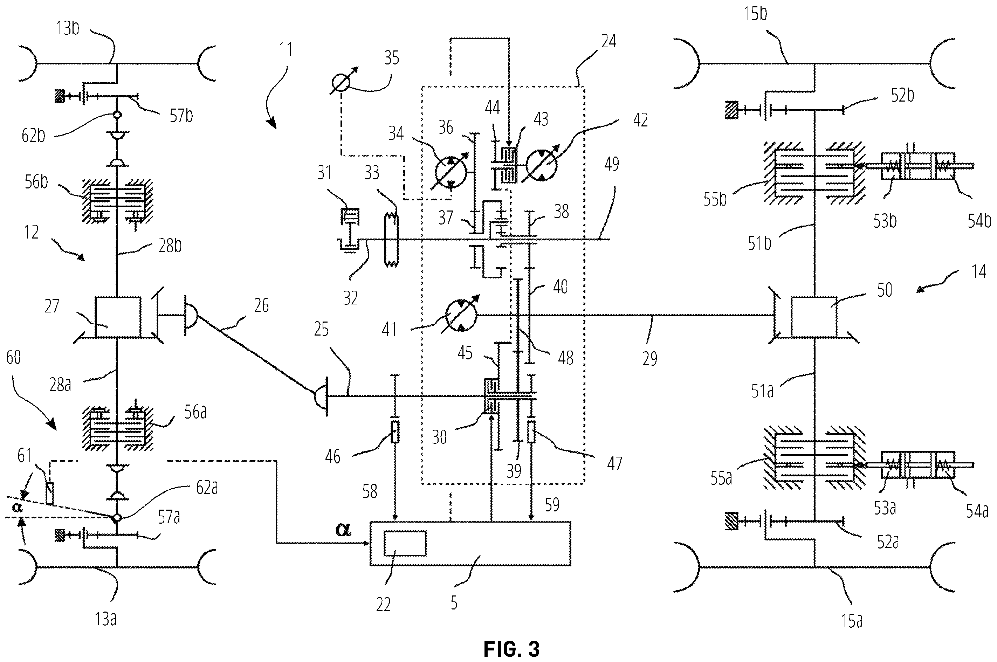

A chassis 4 which is partly visible connects a front axle 12 (including suspension and steering assembly) and a rear axle 14. Left front and rear wheels 13a and 15a as well as right front and rear wheels 13b and 15b (see FIG. 3) are connected to the respective front and rear axles 12 and 14. A drive system 11 drives the front and rear wheels 13a, 13b, 15a and 15b. When the vehicle 1 moves on the ground 19 with a vehicle speed 20 the left front wheel 13a rotates with a rotational speed 9 or with a wheel velocity 16 whereas the left rear wheel 15a rotates with a rotational speed 10 or with a wheel velocity 17.

A control unit 5 is coupled to receive data from a number of sensors 6 and 7. Such data may include (but is not limited to):

- gross weight of the vehicle 1;
- amount of front and/or rear ballasting carried by the vehicle 1;
- weighting information pertaining to a towed or carried implement;
- extent of measured wheel-slip for one or more wheels 13a, 13b, 15a, 15b of the vehicle 1;
- tyre pressure in one or more tyres on respective wheels 13a, 13b, 15a, 15b of the vehicle 1;
- angle of turn directed by a user of the vehicle 1;
- current vehicle speed 20 of the vehicle 1;
- ambient conditions external to the vehicle 1.

Further inputs to the control unit 5 may come from a user-operable human machine interface (HMI 18) such as a touchscreen display and input device positioned in the cab 3, and a geographical positioning system 8 for the vehicle 1.

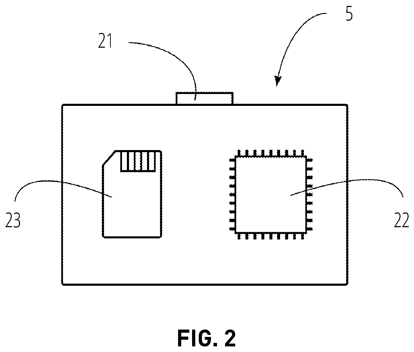

FIG. 2 shows the control unit 5 comprising an interface 21, a controller 22 and a memory 23. The control unit 5 may receive and send signals or data via the interface 21 as for example the signals determined by sensor 6 and sensor 7. The interface 21 may be a wireless interface or a connector. The controller 22 may store the data or signals received by the control unit 5 in the memory 23. The memory 23 may contain additional data or executable computer program products, for example in terms of a computer-implemented method that may be retrieved, processed or carried out by the controller 22. Data or signals resulting from the processing of data or signals or from the execution of a computer program product may be stored in the memory 23 or sent to the interface 21 by the controller 22.

FIG. 3 shows the drive system 11 of the vehicle 1. Such a drive system is disclosed in European patent EP 3 720 760 B1, entitled "Utility vehicle braking", filed on October 26, 2018. The drive system 11 comprises a prime mover such as an internal combustion engine 31 driving an input shaft 32 of a transmission 24 via a flywheel 33. The transmission 24 drives front axle drive output shaft 25 and rear axle drive output shaft 29 to provide propulsive drive to the respective front and rear axles 12 and 14. In addition to providing propulsive drive, the transmission 24 also provides drive to a power take off shaft 49.

The input shaft 32 is connected at its inboard end to a planetary gear assembly 37. The purpose of the planetary gear assembly 37 is to split the torque provided by the input shaft 32 between a mechanical branch 38 and a hydrostatic branch 36. On the opposite side of the planetary gear assembly 37 to the input shaft 32 is the power take off shaft 49.

The hydrostatic branch 36 drives a hydraulic pump 34. The mechanical branch 38 is connected to the front axle drive output shaft 25 and the rear axle drive output shaft 29 as follows. Torque is transmitted from the mechanical branch 38 of the planetary gear assembly 37 to the rear axle drive output shaft 29 via a rear axle drive gear 40. Mounted on the same shaft as the rear axle drive gear 40 is an intermediary gear 48 which in turn drives a front axle drive gear 39 which selectively drives the front axle drive output shaft 25. A first controllable clutch 30 is provided to selectively engage and disengage the front axle drive output shaft 25 from the rear axle drive output shaft 29 or to control a clutch engagement ratio of a torque distribution between the two shafts. This allows wheel grip to be optimized dependent on the ground conditions.

In addition to the mechanical drive path described above, the hydraulic pump 34, the first hydraulic motor 41 and the second hydraulic motor 42 are connected to each other by means of a hydraulic circuit to circulate hydraulic fluid from the pump 34 to the motors 41 and 42 and from the motors 41 and 42 back to the pump 34 (or a reservoir connected with the pump 34). The hydraulic circuit comprises a high pressure line for transferring fluid delivered by the pump 34 and a low pressure line for transferring fluid back to the pump 34. The hydraulic pump 34 is hydraulically connected to a first hydraulic motor 41 which is driveably connected to the rear axle drive output shaft 29 in order to provide hydraulic drive to the rear wheels 15a and 15b. The hydraulic pump 34 is connected in parallel to a second hydraulic motor 42 in order to provide hydraulic drive to the front axle drive output shaft 25 as follows. A measuring unit 35 is integrated in the high pressure line of the hydraulic circuit to determine a pressure signal indicative of a pressure value of the high pressure line. The control unit 5 receives the pressure signal and stores it to the memory 23 of the control unit 5.

The second hydraulic motor 42 is driveably connected to the front axle drive output shaft 25 via first and second hydraulic motor gears 44, 45. A second controllable clutch 43 allows the second hydraulic motor 42 to be selectively engaged and disengaged from the front axle drive output shaft 25. This allows hydraulic drive to be provided to the front axle drive output shaft 25 by the second hydraulic motor 42 in addition to, or alternatively to, the drive delivered to the front axle drive output shaft 25 from the rear axle drive output shaft 29 via the intermediary gear 48 and the front axle drive gear 39, depending on the extent of engagement of the first controllable clutch 30.

First and second hydraulic motor gears 44, 45 have a high transmission ratio. This allows motor 42 to provide high torque at a limited, lower range of vehicle speeds 20. Consequently, at higher vehicle speeds 20, the motor 42 may be disconnected from the driveline via second controllable clutch 43. Due to the design, the first hydraulic motor 41 is provided for delivering lower torque but over the full range of vehicle speeds 20. However, in combination, both motors 41 and 42 enable the transmission 24 to provide a full transmission output power with variable torque, variable vehicle speed and variable driving direction over a full range of vehicle speeds 20.

The pump 34, the first and second motors 41 and 42 are provided each with adjustment means, the adjustment means being operable by an actuator to vary the operating angle of the pump 34, and the first and second motors 41 and 42, respectively. Advantageously, the provision of a separate adjustment means for each of the motors 41 and 42 allows the speed and torque output of the motors 41 and 42 to be independently and flexibly controlled. This offers significant advantages in terms of vehicle control and efficiency.

Rear axle drive output shaft 29 drives the left rear axle shaft 51a and the right rear axle shaft 51b via rear axle differential 50. Note the designations "front", "rear", "left" and "right" as used herein are taken from the point of view of an operator sat facing forward in the cab 3. The rear axle 14 further comprises left and right brake units 55a and 55b, left and right rear axle final drives 52a and 52b, and left and right rear wheels 15a and 15b. As shown, the left brake unit 55a comprises a service brake actuator 53a spring-biased to the open position and a parking brake actuator 54a spring-biased to the closed position. Analogously, the right brake unit 55b comprises a service brake actuator 53b spring-biased to the open position and a parking brake actuator 54b spring-biased to the closed position. Such an arrangement is described in German utility model DE 92 04 417 U1, entitled "Druckmittelbetätigte Lenkbremsanlage für Kraftfahrzeuge mit Anhänger", filed on April 1, 1992.

In like manner, front axle drive output shaft 25 drives the left and right front axle shafts 28a and 28b via cardan shaft 26 and front axle differential 27. The front axle 12 further comprises left and right brake units 56a and 56b, left and right front axle final drives 57a and 57b, and left and right front wheels 13a and 13b.

The vehicle 1 comprises a steering unit 60 for steering the left front wheel 13a and the right front wheel 13b, also referred to as the steerable wheels 13a, 13b, according to a steering demand of an operator controlling the HMI 18. The steering unit 60 comprises a left steering joint 62a, a right steering joint 62b and a steering sensor 61. The left front wheel 13a may be rotated about the left steering joint 62a and the right front wheel 13b may be rotated about the right steering joint 62b. The steering sensor 61 determines a steering angle signal indicative of the steering angle $\alpha$ of the left front wheel 13a. The steering angle signal may be used to determine the steering angle of the right front wheel 13b. Optionally, the steering unit 60 comprises an additional steering angle sensor to determine the steering angle of the right front wheel 13b separately. The control unit 5 receives the steering angle signal and may store it in the memory 23 of the control unit 5.

The first controllable clutch 30 and the second controllable clutch 43 are under the direction of the control unit 5 as described further below, so that the drive to the front wheels 13a, 13b may be selectively engaged or disengaged, or engaged with a controllably variable degree of clutch slippage according to a clutch engagement ratio to enable the engine output torque delivered to the front and rear axles 12 and 14 to be controllably varied.

The first controllable clutch 30 is also provided to control the wheel velocity or rotational speeds of the front and rear axles 12 and 14 to avoid malfunction of the transmission 24. The wheel velocity is the velocity of a wheel in the contact point with the ground 19 and along the ground (radially). For example, with reference to FIG. 1, the wheel velocity 16 is the velocity of the left front wheel 13a in the contact point with the ground 19. Analogously, the wheel velocity 17 is the velocity of the left rear wheel 15a in the contact point with the ground 19. Considering a known wheel diameter, the rotational speed of the wheels can be calculated. Based on that, the wheel velocity can be determined by measuring the rotational speed at any shaft in the drive system 11 which is connected via a fixed, constant ratio to one of the front and rear axles 12 and 14. If the vehicle 1 is equipped with different tyre sizes (requiring an overall gear ratio between front axle 12 and rear axle 14, the wheel velocities for front axle 12 and rear axle 14 should be equal under ideal conditions while due to the diverging tyre diameter, rotational speeds of front axle 12 and rear axle 14 are different. But as the respective gear ratios in the drive system 11 from a transmission 24 to a respective front or rear axle 12 or 14 are known, both rotational speeds and also wheel velocities can be monitored by measuring the rotational speed at any shaft in the drive system 11 which is connected to the respective front and rear axles 12 and 14.

Control unit 5 is permanently monitoring the rotational speed signal 58 coming from speed sensor 46 and the rotational speed signal 59 coming from speed sensor 47. Speed sensor 47 is connected to the rear axle drive output shaft 29 with a fixed ratio so that speed sensor 47 provides a rotational speed signals 59 indicative of the rotational speed of rear axle drive output shaft 29, left and right rear axle shaft 51a and 51b and thereby left and right rear wheels 15a and 15b. Speed sensor 46 is connected to the front axle drive output shaft 25 with a fixed ratio so that speed sensor 46 provides a rotational speed signal 58 indicative of the rotational speed of front axle drive output shaft 25, left and right front axle shaft 28a and 28b and thereby left and right front wheels 13a and 13b.

When the vehicle 1 is driven at constant vehicle speed 20 over ground 19, the wheel velocity for front and rear axle 12 and 14 should be the same if wheel-slip is equal for both axles (in simple terms, the ground 19 under the wheels 13a, 13b, 15a, 15b shows the same condition). A wheel-slip of 10 percent (which is typical for soft ground like fields) would mean that the wheel velocity for front and rear axle 12 and 14 is 10 percent higher than the vehicle speed 20.

Looking now at the rotational speeds of the front axle drive output shaft 25 and the rear axle drive output shaft 29: When vehicle 1 is driving with vehicle speed 20 the front axle drive output shaft 25 and the rear axle drive output shaft 29 rotate with different rotational speeds due to several constraints. For example, the front wheels 13a and wheel 13b rotate faster than the rear wheels 15a and 15b due to the different dimensions (in terms of the outer diameter) of front and rear wheels. The overall gear ratio of the front axle 12 (including front axle differential 27 and front axle final drives 57a, 57b) may be different to the overall gear ratio of the rear axle 14 (including rear axle differential 50 and rear axle final drives 52a, 52b). Other constraints as the lead ratio, the steering angle in relation to the Ackermann steering geometry of the vehicle 1 and a high pull force of the vehicle 1 have influence on the rotational speed of the front axle drive output shaft 25.

Due to the different rotational speeds of the front axle drive output shaft 25 and the rear axle drive output shaft 29 a comparison of these rotational speeds isn't intuitive. Thus, the control unit 5 is configured to normalize the rotational speed of the front or the rear axle drive output shaft 25 or 29 to compensate the constraints mentioned above which cause different rotational speeds of the front axle drive output shaft 25 and rear axle drive output shaft 29. Constraints as the tyre dimensions, the overall gear ratios and the lead ratio may be parameters. Constraints as the pull force may be values determined by a corresponding sensor. I. e., the control unit 5 determines a normalized rotational speed of the front axle drive output shaft 25 and/or a normalized rotational speed of the rear axle drive output shaft 29 based on the parameters and sensor values of the constraints. As a result, the normalized rotational speed of one of both drive output shafts is equal to the rotational speed of the other drive output shaft when the vehicle 1 drives on the ground 19 under normal conditions. Thus, poor vehicle dynamics or an abnormal driving situation such as a slippage of a wheel, e. g. caused by a very inhomogeneous condition of the ground 19, can be easily detected by the control unit 5 if one of both rotational speeds deviates from the other.

Under consideration of usage of normalized rotational speeds, some operating conditions of the vehicle 1 are now described in detail:

Driving straight ahead with both axles 12, 14 on same ground 19: When the vehicle 1 is driving straight ahead, the wheel velocity and normalized rotational speeds of front and rear axle drive output shafts 25, 29 should be equal if the front and rear wheels drive on similar ground 19. In this condition, the first controllable clutch 30 is disengaged so that the first hydraulic motor 41 is driving the rear axle 14 via rear axle drive output shaft 29 without any connection to front axle drive output shaft 25 which is driven by the second hydraulic motor 42 to drive front axle 12 (when second controllable clutch 43 is engaged). This condition is preferred as an independent drive for the axles 12, 14 to avoid torsional stresses in the driveline. However, there are situations where the engagement of first controllable clutch 30 is advantageous.

Driving straight ahead with both axles 12, 14 on inhomogeneous (different) ground 19: If at least one wheel 13a. 13b of the front axle 12 is driving on sandy or frozen ground (with the wheels 15a, 15b of the rear axle 14 still driving on hard soil) with the first controllable clutch 30 disengaged, the front axle 12 would start spinning (as the torque supplied cannot be transferred to the ground 19). In terms of the wheel velocity, this means that the wheel velocity / rotational speed of the front axle 12 would increase considerably compared to the wheel velocity / rotational speed of the rear axle 14. In other words, the difference of the wheel velocity / rotational speed between the front axle 12 and the rear axle 14 (being ideally zero) would increase. As a consequence, the fluid supplied by pump 34 would be completely consumed by second hydraulic motor 42 (due to missing resistance / torque support) so that first hydraulic motor 41 would stand still. In other words, when looking at the pressure in the hydraulic circuit of pump 34, first motor 41 and second motor 42, the fluid would flow at a minimal pressure level (nearly pressureless) in second motor 42 assigned to front axle 12 due to the missing torque support at second motor 42. As both motors 41, 42 are connected in the same hydraulic circuit (in parallel), the same minimal pressure level would impinge first motor 41 assigned to rear axle 14. As a result, first motor 41 cannot supply torque. With front axle 12 spinning on sandy or iced ground 19 and rear axle 14 standing still, the vehicle 1 would just slow down and stop. Changing the vehicle speed to adjust speeds and torque supplied by motors 41 and 42 may help to a certain degree but not on ground 19 which is glassy frozen. Furthermore reducing speed is not advantageous during agricultural work (e. g. ploughing or seeding) as the work result may suffer.

To avoid the unintended stand still of the vehicle 1 on sandy or iced ground 19, the control unit 5 is permanently adjusting the variable clutch engagement ratio of the first controllable clutch 30. The higher the clutch engagement ratio is the higher is the engagement of the first controllable clutch 30. I. e., the first controllable clutch 30 is fully disengaged if the clutch engagement ratio is 0% whereas the first controllable clutch 30 is fully engaged if the clutch engagement ratio is 100%.

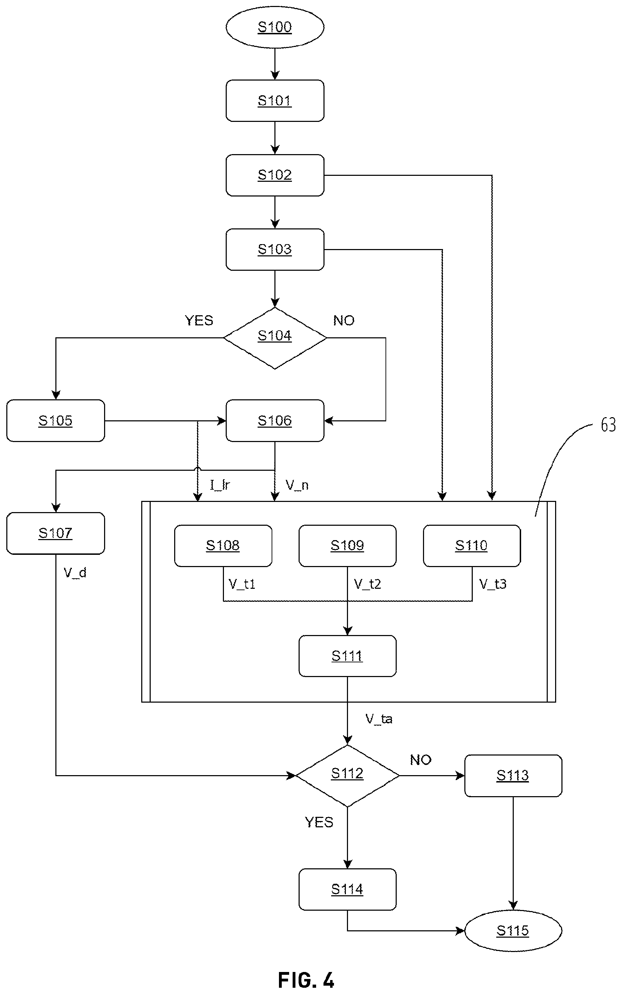

FIG. 4 shows a flow diagram of a method for adjusting the variable clutch engagement ratio of the first controllable clutch 30. The method may be a computer-implemented method stored as a computer program product in the memory 23 of the control unit 5. The method may be carried out by the controller 22 of the control unit 5. The method is described by way of example of several steps without any restriction in respect of that steps. I. e. the number or the order of steps may be adapted, for example single steps may be excluded and/or added and executed earlier or later than described. The method comprises also a method module 63. The method module 63 may receive several signals or data and provide the signals and data to all method steps contained in the method module 63, here for example method steps S108 to S111. The method starts with step S100 and proceeds to step S101.

The method proceeds to step S101 and the control unit 5 determines several signals and parameters as

- the rotational speed signal 58 (front axle drive output shaft 25) received from the speed sensor 46,
- the rotational speed signal 59 (rear axle drive output shafts 29) received from the speed sensor 47,
- pressure signal of the high pressure line received from the measuring unit 35,
- steering angle signal $\alpha$ received from the steering sensor 61,
- signal of a brake activation received from HMI 18 and/or brake units 55a, 55b, 56a and 56b,
- tyre dimensions (outer diameters) of the front and rear wheels 13a, 13b, 15a and 15b, read out from memory 23,
- overall gear ratios of the front axle 12 and the rear axle 14 read out from memory 23, and
- pull force of vehicle 1.

The pull force may be calculated by the control unit 5 based on the pressure signal of the high pressure line. For example, the control unit 5 may use a procedure to calculate the pull force as disclosed in PCT patent application WO 2013/053564 A1, entitled "Method to determine vehicle weight", filed on September 13, 2012.

Then, the method proceeds to step S102 and the control unit 5 determines if a brake steering action is active. This is the case, if the vehicle 1 is steered and braked at the same time so that the control units 5 simultaneously receives a steering angle signal $\alpha$ and a signal of a brake activation. If brake steering action is active the control unit 5 sets a positive brake steering index, if not a negative brake steering index, and forwards the brake steering index to the method module 63.

The method proceeds to step S103 and the control unit 5 determines a pull force dependent factor. The pull force dependent factor may be determined by a look-up table or characteristics stored in the memory 23 of the control unit 5. The higher the pull force is the lower is the pull force dependent factor. The pull force dependent factor may be set in relation to the maximum pull force provided by the vehicle 1 and is sent to the method module 63.

The method proceeds to step S104 and the control unit 5 checks whether the conditions for determining the lead ratio are fulfilled. The conditions are fulfilled if

- the pull force is below a first parameter p1,
- the steering angle signal $\alpha$ is below a second parameter p2,
- the rotational speed signal 58 is between a third and a forth parameter p3 and p4,
- the rotational speed signal 59 is between a fifth and sixth parameter p5 and p6,
- the brake units 55a, 55b, 56a and 56b are released, and/or
- the variable clutch engagement ratio of the first controllable clutch 30 is below a seventh parameter p7.

If the conditions are fulfilled the method proceeds to step S105 to determine the lead ratio of the vehicle 1. Otherwise, a default value is assigned to the lead value, as for example a value of 1, and the method steps to step S106.

At step S105, the control unit 5 determines the lead ratio of the vehicle 1. The lead ratio may be determined according to the following formula:

$$\text{lead ratio} = \frac{\left(\begin{array}{c}\text{front tyre rolling}\\ \text{circumference}\end{array} \times \begin{array}{c}\text{Front axle}\\ \text{mechanical ratio}\end{array}\right) - \begin{array}{c}\text{Rear tyre rolling}\\ \text{circumference}\end{array}}{\begin{array}{c}\text{Rear tyre rolling}\\ \text{circumference}\end{array}} \cdot 100$$

wherein the front axle mechanical ratio may be determined by one-tenth of the rotations of a front wheel after ten rotations of a rear wheel. Alternatively, the lead ratio may be determined based on the rotational speeds of the front axle drive output shaft 25 and the rear axle drive output shaft 29. If a lead ratio has been determined a positive index I_lr is sent to the method module 63 to indicate the event of the valid determination of the lead ratio. If not, the index I_lr is negative.

At step S106, the control unit 5 determines the normalized rotational speed of the front axle drive output shaft 25 (V_n25) and/or the normalized rotational speed of the rear axle drive output shaft 29 (V_n29) to compensate the constraints as mentioned above, as for example different dimensions (in terms of the outer diameter) of front and rear wheels, overall gear ratio of the front axle 12, overall gear ratio of the rear axle 14, lead ratio, the steering angle in relation to the Ackermann steering geometry and a high pull force.

Then, the method proceeds to step S107 and the control unit 5 determines a speed difference V_d between the rotational speed of the front axle drive output shaft 25 and the rotational speed of the rear axle drive output shaft 29, for example according to following formula:

$$speed\ difference\ (V\_d) = \begin{vmatrix} rotational\ speed\ of \\ front\ axle\ drive\ output\ shaft\ (28) \end{vmatrix} - \begin{vmatrix} normalized\ rotational\ speed\ of \\ rear\ axle\ drive\ output\ shaft\ (29) \end{vmatrix}$$

Since the control unit 5 uses normalized rotational speed values for determining the speed difference, the speed difference V_d itself is a normalized value.

The method proceeds to the method module 63 comprising the steps S108 to S111. The signals and data provided to the method module 63 may be distributed to each of the steps S108 to S111 contained in the method module 63. The steps S108 to S110 may be processed simultaneously.

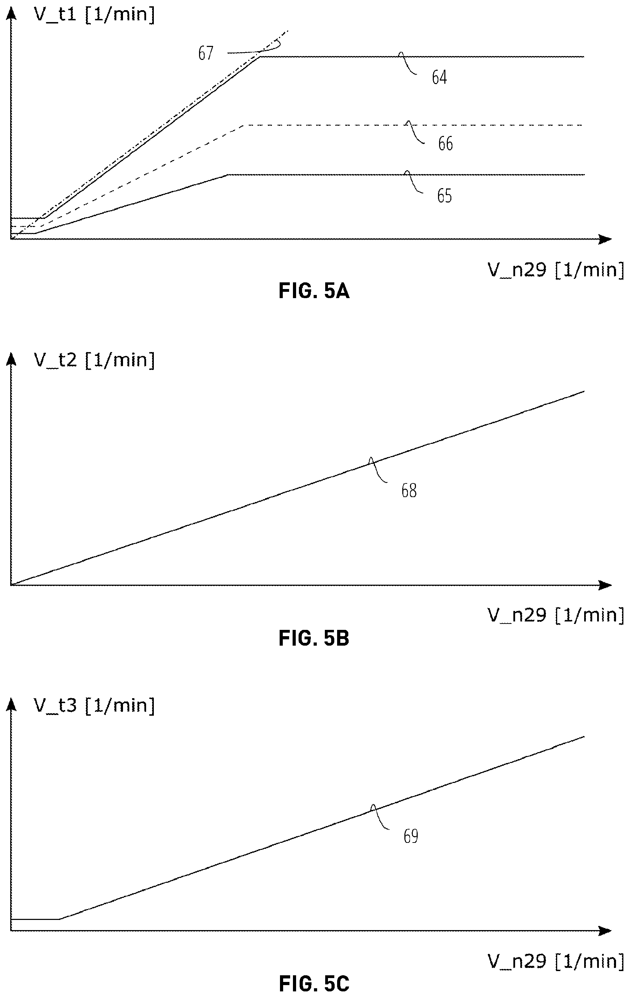

At step S108, the control unit 5 determines a first threshold value V_t1 for the speed difference V_d based on the pull force and the normalized rotational speed of the rear axle drive output shaft 29 (V_n29). The first threshold value V_t1 may be determined by means of a look-up table or by characteristics as shown in FIG. 5A.

As can be seen in the diagram of FIG. 5A, an upper characteristic 64 defines an upper limit and a lower characteristic 65 defines a lower limit. Between the upper and the lower characteristic 64 and 65 additional characteristics may be defined as indicated with a characteristic 66 for example. All characteristics together define a set of characteristics. Each characteristic of the set of characteristics is assigned to a pull force wherein the upper characteristic 64 is assigned to a very low pull force and the lower characteristic 65 is assigned to a very high pull force. The gradient of each characteristic may depend on the pull force dependent factor wherein the gradients of all characteristics of a set of characteristics may be below a gradient limit 67. For example, the gradient limit 67 may be defined by a characteristic of 5% of the normalized rotational speed of the rear axle drive output shaft 29.

The control unit 5 selects a characteristic out of the set of characteristics based on the pull force determined at step S101, for example characteristic 66. Under consideration of the selected characteristic, the control unit 5 determines the first threshold value V_t1 that corresponds to the normalized rotational speed value of the rear axle drive output shaft 29 (V_n29) determined at step S106.

Since different characteristics are assigned to different pull forces the control unit 5 can adapt the first threshold value V_t1 to any change of the pull force of the vehicle 1. Thus, poor vehicle dynamics or abnormal driving situations with slipping wheels can be mitigated and driving experience with enhanced traction of the wheels on inhomogeneous ground 19 improved.

At step S109, the control unit 5 determines a second threshold value V_t2 for the speed difference V_d. As long as the lead ratio hasn't been determined at step S105 the lead ratio is void. If the lead ratio is void the control unit 5 determines the second threshold value V_t2 by means of a look-up table or by a characteristic as shown in FIG. 5B. The pending determination of the lead ratio may be indicated by a negative index I_lr set at step S105 after a valid determination of the lead ratio. The control unit 5 recognizes the negative index I_lr and checks whether the pull force of the vehicle 1 is low or high. In case of a low pull force the second threshold value V_t2 is determined as a value that corresponds to the normalized rotational speed of the rear axle drive output shaft 29 according to the characteristic 68 of FIG. 5B. Otherwise, the control unit 5 sets the second threshold value V_t2 to zero. When the lead ratio has been determined the control unit 5 recognizes the positive index I_lr. Then, the control unit 5 sets the second threshold value also to zero.

At step S110, the control unit 5 determines a third threshold value V_t3 for the speed difference V_d. The control unit 5 checks whether a brake steering action is active indicated by a positive brake steering index set at step S102. As long as a brake steering action is active the control unit 5 determines the third threshold value V_t3 by means of a look-up table or by a characteristic as shown in FIG. 5C. I. e., the third threshold value V_t3 is determined as a value that corresponds to the normalized rotational speed of the rear axle drive output shaft 29 according to the characteristic 69 of FIG. 5C. As can be seen in FIG. 5C, the third threshold value V_t3 has an absolute minimum value greater than zero for the full range of normalized rotational speeds of the rear axle drive output shaft 29 (V_n29). If the control unit 5 recognizes a negative brake steering index indicating that no brake steering action is active the control unit 5 sets the third threshold value V_t3 to zero.

The third threshold value V_t3 according to characteristic 69 may be higher than 5% of the normalized rotational speed V_n29 of the rear axle drive output shaft 29, for example between 15 and 20%. The second threshold value V_t2 according to characteristic 68 may higher than 5% of the normalized rotational speed V_n29 of the rear axle drive output shaft 29 but below 15 to 20% of the normalized rotational speed V_n29 of the rear axle drive output shaft 29.

Then, the method proceeds to step S111 and the control unit 5 checks which of the first, second and third threshold values (V_t1, V_t2, V-T3) has the highest value and determines a maximum threshold value out of these three threshold values. Then, the control unit 5 sets the maximum threshold value as the active threshold value V_ta. Thus, the control unit 5 may set the first threshold value V_t1, the second threshold value V_t2 or the third threshold value V_t3 as the active threshold value V_ta depending on which of these three threshold values is higher than the other two threshold values. For example, the control unit 5 sets the first threshold value V_t1 as active threshold value V_ta if the lead ratio has been validly determined (at step S105) and an absence of a brake steering action has been detected (at step S102).

The method proceeds to step S112 and the control unit 5 compares the speed difference V_d determined at step S107 with the active threshold value V_ta determined at step S111. If the speed difference V_d exceeds the active threshold value V_ta the method proceeds with step S114. If not, the method proceeds with step S113. Depending on whether the speed difference V_d exceeds the the active threshold value V_ta or not the control unit 5 controls the clutch engagement ratio accordingly as described in the following.

At step S113, the control unit 5 adjusts the variable clutch engagement ratio of the first controllable clutch 30 to release the first controllable clutch 30. I. e., the control unit 5 reduces the variable clutch engagement ratio until no torque is transmitted by the first controllable clutch 30 between the front axle drive output shaft 25 and the rear axle drive output shaft 29.

Then, the method proceeds to step S115 and ends.

At step S114, the control unit 5 adjusts the variable clutch engagement ratio of the first controllable clutch 30 to reduce the speed difference V_d. Doing so, the control unit 5 increases the variable clutch engagement ratio to increase the level of engagement of the first controllable clutch 30 and to increase the torque transmitted by the first controllable clutch 30. The variable clutch engagement ratio is increased to reduce the speed difference V_d. The variable clutch engagement ratio may increased until the the speed difference V_d falls below the active speed threshold V_ta. Optionally, the variable clutch engagement ratio may increased until the rotational speed of the front axle drive output shaft 25 is equal to the rotational speed of the rear axle drive output shaft 29 so that the speed difference V_d is reduced (nearly) to zero.

Due to the three different threshold values V_t1, V_t2 and V_t3 and the variability of the first threshold value V_t1 the control unit 5 can react to a variety of driving situations causing poor vehicle dynamics or driving instabilities. Since the selection of the active threshold value V_ta depends on the maximum value of the three threshold values V_t1, V_t2 and V_t3 the control unit 5 alleviates the driving situation having the most negative impact on the vehicle dynamics or the driving behavior.

As for example, the control unit 5 may react individually in driving situations as straight ahead driving, turning and steering braking as follows. For reasons of simplicity, it is assumed that a lead ratio has already been determined by the control unit 5 at step S105. The rotational speed signals 58 and 59 of the speed sensor 46 and speed sensor 47 are permanently monitored to determine a speed difference V_d.

Since during straight ahead driving a brake steering action doesn't occur the control unit 5 sets the first threshold value V_t1 as active threshold value V_ta (instead of the third threshold value V_t3) according to step S108. If the speed difference V_d exceeds the first threshold value V_t1 during straight ahead driving the control unit 5 increases the clutch engagement ratio and controllably engages the first controllable clutch 30 until the first threshold value V_t1 is undercut again. If the front axle 12 spins on a sandy surface, this would result in that the first controllable clutch 30 is further engaged so that the second motor 42 is drivingly connected to the rear axle 14 which can support the torque to avoid spinning. This would also keep first motor 41 under supply to drive the rear axle 14. The vehicle 1 would not be forced into stand still then. Thus, the method keeps independent drive of both axles 12 and 14 upheld most of the time to avoid torsional stresses in the drive system 11.

The operator of the vehicle 1 may now control the steering unit 60 for turning the vehicle 1. During a driven turn (determined by steering sensor 61) without any braking action, a brake steering action wouldn't occur either. But the Ackermann steering geometry influences the driving situation. The steered front wheels 13a, 13b roll on a greater curve radius (path) so that they have to speed up to pass the curved path at the same time compared to the rear wheels 15a, 15b. Thus, the control unit 5 would consider the steering angle for the determination of the normalized rotational speed of the rear axle drive output shaft V_n29 wherein an adapted normalized rotational speed of the rear axle drive output shaft V_n29 would result in an adaption of the first threshold value V_t1 as can be seen in FIG. 5A.

In addition, the pull force of the vehicle 1 may have impact on the situation of driving a turn. If a high pull force is acting (e. g. when vehicle 1 is pulling a heavy implement) the front axle 12 may be lightened so that the vehicle 1 can't follow the radius of the curve like it is intended by the steering angle. Thus, the control unit 5 would consider the pull force for the determination of an appropriate characteristic 66 out of the set of characteristics according to step S108 wherein a different characteristic would also result in an adaption of the first threshold value V_t1 as can be seen in FIG. 5A.

Then, the adapted threshold value V_t1 is set as a new active threshold value V_ta and used for the comparison with the speed difference at step S107. The adaption of the first threshold value V_t1 results in improved vehicle dynamics for driving a turn and prevents front axle slippage, for example. So, in the case when the front wheels 13a, 13b drive on icy surface in the curve, the control unit 5 can still react to improve driving behavior and, furthermore, the drag capability of the front wheels 13a, 13b supporting the turn.

When the operator may apply the brake units 55a, 55b, 56a, 56b during driving a turn a brake steering action is present that is detected by the control unit 5 according to step S102. Then, the control unit 5 sets the third threshold value V_t3 as active threshold value V_ta (instead of the first threshold value V_t1) according to step S108.

In case of steering braking, the inner steered wheel is braked while the steered outer wheel should support the steering brake action by speeding up to further drag the vehicle 1 into the curve. The third threshold value V_t3 enables that the vehicle 1 can pass the curve and steering brake but spinning is be prevented, so that in the case when the front wheels 13a, 13b drive via icy surface in the curve, the control unit 5 can still react to improve driving behavior of the vehicle 1.

After step S114, the method proceeds to step S115 and ends.

After step S115, the method may start at step S100 again. Parameters, signals and data that have been determined and stored in the memory 23 may be reused when the method starts again. For example, if the lead ratio has been determined in a prior run of the method the lead ratio may be used in a subsequent run of the method.

**LISTING OF DRAWING ELEMENTS**

1 vehicle
2 engine compartment
3 cab
4 chassis
5 control unit
6 sensor
7 sensor
8 geographical positioning system
9 rotational speed
10 rotational speed
11 drive system
12 front axle
13a wheel
13b wheel
14 rear axle
15a wheel
15b wheel
16 wheel velocity
17 wheel velocity
18 HMI
19 ground
20 vehicle speed
21 interface
22 controller
23 memory
24 transmission
25 front axle drive output shaft
26 cardan shaft
27 front axle differential
28a front axle shaft
28b front axle shaft
29 rear axle drive output shaft
30 first controllable clutch
31 engine
32 input shaft
33 flywheel
34 pump
35 measuring unit
36 hydrostatic branch
37 planetary gear assembly
38 mechanical branch
39 front axle drive gear
40 rear axle drive gear
41 motor
42 motor
43 second controllable clutch
44 hydraulic motor gear
45 hydraulic motor gear

46 speed sensor
47 speed sensor
48 intermediary gear
49 power take off shaft
50 rear axle differential
51a rear axle shaft
51b rear axle shaft
52a rear axle final drive
52b rear axle final drive
53a service brake actuator
53b service brake actuator
54a parking brake actuator
54b parking brake actuator
55a brake unit
55b brake unit
56a brake unit
56b brake unit
57a front axle final drive
57b front axle final drive
58 rotational speed signal
59 rotational speed signal
60 steering unit
61 steering sensor
62a steering joint
62b steering joint
63 method module
64 characteristic
65 characteristic
66 characteristic
67 gradient limit
68 characteristic
69 characteristic

## Claims

1. A vehicle (1) comprising

   a drive system (11) for generating a drive torque and transmitting the drive torque to a front axle drive output shaft (25) and a rear axle drive output shaft (29); with
   a controllable clutch (30) arranged between the front axle drive output shaft (25) and the rear axle drive output shaft (29) for distributing the drive torque between the front axle drive output shaft (25) and the rear axle drive output shaft (29) according to a clutch engagement ratio;
   a first speed sensor (46) for determining a rotational speed of the front axle drive output shaft (25);
   a second speed sensor (47) for determining a rotational speed of the rear axle drive output shaft (29); and
   a control unit (5) configured to determine a speed difference ($V\_d$) between the rotational speed of the front axle drive output shaft (25) and the rotational speed of the rear axle drive output shaft (29);
   **characterized by**
   a measuring unit (35) for determining a pull force; wherein
   the control unit (5) is further configured

   to determine a first threshold value ($V\_t1$) based on the pull force;
   to set the first threshold value ($V\_t1$) as an active threshold value ($V\_ta$); and
   to control the clutch engagement ratio of the controllable clutch (30) in dependence on the speed difference ($V\_d$) and the active threshold value ($V\_ta$).

2. The vehicle (1) of claim 1, wherein the control unit (5) is configured to normalize the rotational speed of the front or the rear axle drive output shaft (25, 29) in respect of a lead ratio,

a steering angle ($\alpha$) of steerable wheels (13a, 13b) and/or
dimensions of front and rear wheels (13a, 13b, 15a, 15b).

3. The vehicle (1) of claim 1 or 2, wherein the higher the pull force is, the lower the value of the first threshold value (V_t1) is determined by the control unit (5), and vice versa.

4. The vehicle (1) of any one of claims 1 to 3, wherein the control unit (5) is configured to determine the first threshold value (V_t1) based on the rotational speed of the front axle drive output shaft (25) or the rear axle drive output shaft (29).

5. The vehicle (1) of any one of claims 1 to 4, wherein the control unit (5) is configured

   to determine at least one additional threshold value (V_t2, V_t3); and
   to set the additional threshold value as the active threshold value (V_ta) if the first threshold value (V_t1) is below the additional threshold value (V_t2, V_t3).

6. The vehicle (1) of claim 5, wherein the control unit (5) is configured

   to determine a lead ratio; and
   to determine a second threshold value (V_t2) as one of the at least one additional threshold value if the determination of the lead ratio is void;
   wherein the second threshold value (V_t2) is based on the rotational speed of the front axle drive output shaft (25) or the rear axle drive output shaft (29).

7. The vehicle (1) of claim 6, comprising

   a brake unit (55a, 55b, 56a, 56b);
   a steerable wheel (13a, 13b); and
   a steering sensor (61) for determining a steering angle ($\alpha$) of the steerable wheel (13a, 13b),
   wherein the control unit (5) determines the lead ratio if

   the pull force is below a first parameter,
   the steering angle ($\alpha$) is below a second parameter,
   the brake unit (55a, 55b, 56a, 56b) is released, and/or
   the clutch engagement ratio of the controllable clutch (30) is below a third parameter.

8. The vehicle (1) of claim 6 or 7, wherein the control unit (5) is configured to determine the second threshold value (V_t2) as a constant value after a valid determination of the lead ratio.

9. The vehicle (1) of any one of claims 5 to 8, wherein the control unit (5) is configured

   to detect a brake steering action; and
   to determine a third threshold value (V_3) as one of the at least one additional threshold value in dependence on a detection of a brake steering action.

10. The vehicle (1) of any one of claims 5 to 9, wherein the control unit (5) is configured

    to determine a maximum threshold value out of the first threshold value (V_t1) and the at least one additional threshold value (V_t2, V_t3); and
    to set the maximum threshold value as the active threshold value (V_ta).

11. The vehicle (1) of any one of claims 1 to 10, wherein the control unit (5) is configured

    to compare the speed difference (V_d) with the active threshold value (V_ta); and
    to adjust the clutch engagement ratio of the controllable clutch (30) to reduce the speed difference (V_d).

12. The vehicle (1) of claim 11, wherein the control unit (5) is configured to reduce the speed difference (V_d) if the speed difference (V_d) exceeds the active threshold value (V_ta).

13. The vehicle (1) of claim 11 or 12, wherein the control unit (5) is configured to reduce the clutch engagement ratio if the speed difference (V_d) is below the active threshold value (V_ta).

14. The vehicle (1) of any one of claims 1 to 13, wherein the control unit (5) is configured

> to determine a lead ratio;
> to detect a brake steering action; and
> to set the first threshold value (V_t1) as the active threshold value (V_ta) only if the lead ratio has been validly determined and an absence of a brake steering action has been detected.

15. The vehicle (1) of any one of claims 2 to 14, wherein the first threshold value (V_t1) is equal or below 5% of the normalized rotational speed of the front or rear axle drive output shaft (25, 29).

16. The vehicle (1) of any one of claims 5 to 14, wherein the at least one additional threshold value (V_t2, V_t3) is higher than 5% of a normalized rotational speed of the front or rear axle drive output shaft (25, 29).

17. The vehicle (1) of any one of the proceeding claims, wherein the measuring unit (35) is a pressure sensor integrated in a pressure line of a hydraulic circuit of a component of the drive system (11).

18. Method for controlling a variable clutch engagement ratio of a first controllable clutch (30) of a vehicle (1), comprising the steps:

> Determining a rotational speed value of a front axle drive output shaft (25) connected with the first controllable clutch (30);
> determining a rotational speed value of a rear axle drive output shaft (29) connected with the first controllable clutch (30);
> determining a normalized rotational speed value (V_n29) of the rear axle drive output shaft (29);
> determining a speed difference (V_d) between the rotational speed value of the front axle drive output shaft (25) and the normalized rotational speed value (V_n29) of the rear axle drive output shaft (29);
> **characterized by**
> determining a pull force of the vehicle (1);
> determining a first threshold value (V_t1) based on the normalized rotational speed value (V_29) of the rear axle drive output shaft (29) and the pull force;
> comparing the speed difference (V_d) with the first threshold value (V_t1); and
> increasing the clutch engagement ratio if the speed difference (V_d) exceeds the first threshold value (V_t1) to reduce the speed difference (V_d).

19. The method of claim 18 comprising the steps:

> Determining a second threshold value in dependence on a determination of a lead ratio;
> determining a third threshold value in dependence on a brake steering action;
> determining a maximum threshold value out of the first, second and third threshold values and setting the maximum threshold value as the active threshold value.

**Patentansprüche**

1. Fahrzeug (1), umfassend:

> ein Antriebssystem (11) zum Erzeugen eines Antriebsmoments und Übertragen des Antriebsmoments auf eine Abtriebswelle (25) des Vorderachsantriebs und eine Abtriebswelle (29) des Hinterachsantriebs; mit
> eine steuerbare Kupplung (30), die zwischen der Abtriebswelle (25) des Vorderachsantriebs und der Abtriebswelle (29) des Hinterachsantriebs angeordnet ist, um das Antriebsmoment zwischen der Abtriebswelle (25) des Vorderachsantriebs und der Abtriebswelle (29) des Hinterachsantriebs gemäß einem Kupplungseinrückverhältnis zu verteilen;
> einen ersten Drehzahlsensor (46) zum Bestimmen einer Drehzahl der Abtriebswelle (25) des Vorderachsantriebs;
> einen zweiten Drehzahlsensor (47) zum Bestimmen einer Drehzahl der Abtriebswelle (29) des Hinterachsantriebs; und

eine Steuereinheit (5), die dazu ausgelegt ist, eine Drehzahldifferenz (V_d) zwischen der Drehzahl der Abtriebswelle (25) des Vorderachsantriebs und der Drehzahl der Abtriebswelle (29) des Hinterachsantriebs zu bestimmen;

**gekennzeichnet durch**

eine Messeinheit (35) zum Bestimmen einer Zugkraft; wobei die Steuereinheit (5) ferner dazu ausgelegt ist, einen ersten Schwellenwert (V_t1) basierend auf der Zugkraft zu bestimmen;

den ersten Schwellenwert (V_t1) als aktiven Schwellenwert (V_ta) festzulegen; und

das Kupplungseinrückverhältnis der steuerbaren Kupplung (30) in Abhängigkeit von der Drehzahldifferenz (V_d) und dem aktiven Schwellenwert (V_ta) zu steuern.

2. Fahrzeug (1) nach Anspruch 1, wobei die Steuereinheit (5) dazu ausgelegt ist, die Drehzahl der Abtriebswellen (25, 29) des Vorder- oder Hinterachsantriebs in Bezug auf ein Vorlaufverhältnis, einen Lenkwinkel ($\alpha$) lenkbarer Räder (13a, 13b) und/oder von Abmessungen der Vorder- und Hinterräder (13a, 13b, 15a, 15b) zu normalisieren.

3. Fahrzeug (1) nach Anspruch 1 oder 2, wobei gilt: je höher die Zugkraft ist, desto niedriger bestimmt die Steuereinheit (5) den ersten Schwellenwert (V_t1), und umgekehrt.

4. Fahrzeug (1) nach einem der Ansprüche 1 bis 3, wobei die Steuereinheit (5) dazu ausgelegt ist, den ersten Schwellenwert (V_t1) basierend auf der Drehzahl der Abtriebswelle (25) des Vorderachsantriebs oder der Abtriebswelle (29) des Hinterachsantriebs zu bestimmen.

5. Fahrzeug (1) nach einem der Ansprüche 1 bis 4, wobei die Steuereinheit (5) dazu ausgelegt ist,

mindestens einen zusätzlichen Schwellenwert (V_t2, V_t3) zu bestimmen; und

den zusätzlichen Schwellenwert als aktiven Schwellenwert (V_ta) festzulegen, wenn der erste Schwellenwert (V_t1) unterhalb des zusätzlichen Schwellenwerts (V_t2, V_t3) liegt.

6. Fahrzeug (1) nach Anspruch 5, wobei die Steuereinheit (5) dazu ausgelegt ist, ein Vorlaufverhältnis zu bestimmen; und

einen zweiten Schwellenwert (V_t2) als einen der mindestens einen zusätzlichen Schwellenwerte zu bestimmen, falls die Bestimmung des Vorlaufverhältnisses nicht möglich ist;

wobei der zweite Schwellenwert (V_t2) auf der Drehzahl der Abtriebswelle (25) des Vorderachsantriebs oder der Abtriebswelle (29) des Hinterachsantriebs basiert.

7. Fahrzeug (1) nach Anspruch 6, umfassend:

eine Bremseinheit (55a, 55b, 56a, 56b);

ein lenkbares Rad (13a, 13b); und

einen Lenksensor (61) zum Bestimmen eines Lenkwinkels ($\alpha$) des lenkbaren Rades (13a, 13b),

wobei die Steuereinheit (5) das Vorlaufverhältnis bestimmt, wenn

die Zugkraft unterhalb eines ersten Parameters liegt,

der Lenkwinkel ($\alpha$) unterhalb eines zweiten Parameters liegt,

die Bremseinheit (55a, 55b, 56a, 56b) gelöst wird, und/oder

das Kupplungseinrückverhältnis der steuerbaren Kupplung (30) unterhalb eines dritten Parameters liegt.

8. Fahrzeug (1) nach Anspruch 6 oder 7, wobei die Steuereinheit (5) dazu ausgelegt ist, den zweiten Schwellenwert (V_t2) nach einer gültigen Bestimmung des Vorlaufverhältnisses als konstanten Wert zu bestimmen.

9. Fahrzeug (1) nach einem der Ansprüche 5 bis 8, wobei die Steuereinheit (5) dazu ausgelegt ist,

eine Bremslenkaktion zu erkennen; und

einen dritten Schwellenwert (V_3) als einen der mindestens einen zusätzlichen Schwellenwerte in Abhängigkeit von der Erkennung einer Bremslenkaktion zu bestimmen.

10. Fahrzeug (1) nach einem der Ansprüche 5 bis 9, wobei die Steuereinheit (5) dazu ausgelegt ist, einen maximalen Schwellenwert aus dem ersten Schwellenwert (V_t1) und dem mindestens einen zusätzlichen Schwellenwert (V_t2, V_t3) zu bestimmen; und den maximalen Schwellenwert als aktiven Schwellenwert (V_ta) festzulegen.

11. Fahrzeug (1) nach einem der Ansprüche 1 bis 10, wobei die Steuereinheit (5) dazu ausgelegt ist,

die Drehzahldifferenz (V_d) mit dem aktiven Schwellenwert (V_ta) zu vergleichen; und
das Kupplungseinrückverhältnis der steuerbaren Kupplung (30) anzupassen, um die Drehzahldifferenz (V_d) zu verringern.

12. Fahrzeug (1) nach Anspruch 11, wobei die Steuereinheit (5) dazu ausgelegt ist, die Drehzahldifferenz (V_d) zu reduzieren, wenn die Drehzahldifferenz (V_d) den aktiven Schwellenwert (V_ta) überschreitet.

13. Fahrzeug (1) nach Anspruch 11 oder 12, wobei die Steuereinheit (5) dazu ausgelegt ist, das Kupplungseinrückverhältnis zu reduzieren, wenn die Drehzahldifferenz (V_d) unterhalb des aktiven Schwellenwerts (V_ta) liegt.

14. Fahrzeug (1) nach einem der Ansprüche 1 bis 13, wobei die Steuereinheit (5) dazu ausgelegt ist,

ein Vorlaufverhältnis zu bestimmen;
eine Bremslenkaktion zu erkennen; und
den ersten Schwellenwert (V_t1) nur dann als aktiven Schwellenwert (V_ta) festzulegen, wenn das Vorlaufverhältnis gültig ermittelt wurde und keine Bremslenkaktion erkannt wurde.

15. Fahrzeug (1) nach einem der Ansprüche 2 bis 14, wobei der erste Schwellenwert (V_t1) gleich oder kleiner als 5 % der normalisierten Drehzahl der Abtriebswelle (25, 29) des Vorder- oder Hinterachsantriebs ist.

16. Fahrzeug (1) nach einem der Ansprüche 5 bis 14, wobei der mindestens eine zusätzliche Schwellenwert (V_t2, V_t3) größer als 5 % die normalisierte Drehzahl der Abtriebswelle (25, 29) des Vorder- oder Hinterachsantriebs ist.

17. Fahrzeug (1) nach einem der vorhergehenden Ansprüche, wobei die Messeinheit (35) ein Drucksensor ist, der in eine Druckleitung eines Hydraulikkreises einer Komponente des Antriebssystems (11) integriert ist.

18. Verfahren zum Steuern eines variablen Kupplungseinrückverhältnisses einer ersten steuerbaren Kupplung (30) eines Fahrzeugs (1), umfassend die Schritte:

Bestimmen eines Drehzahlwerts einer Abtriebswelle (25) des Vorderachsantriebs, die mit der ersten steuerbaren Kupplung (30) verbunden ist;
Bestimmen eines Drehzahlwerts einer Abtriebswelle (29) des Hinterachsantriebs, die mit der ersten steuerbaren Kupplung (30) verbunden ist;
Bestimmen eines normalisierten Drehzahlwerts (V_n29) der Abtriebswelle (29) des Hinterachsantriebs;
Bestimmen einer Drehzahldifferenz (V_d) zwischen dem Drehzahlwert der Abtriebswelle (25) des Vorderachsantriebs und dem normalisierten Drehzahlwert (V_n29) der Abtriebswelle (29) des Hinterachsantriebs;
**gekennzeichnet durch**
Bestimmen einer Zugkraft des Fahrzeugs (1);
Bestimmen eines ersten Schwellenwerts (V_t1) basierend auf dem normalisierten Drehzahlwert (V_29) der Abtriebswelle (29) des Hinterachsantriebs und der Zugkraft;
Vergleichen der Drehzahldifferenz (V_d) mit dem ersten Schwellenwert (V_t1); und
Erhöhen des Kupplungseinrückverhältnisses, wenn die Drehzahldifferenz (V_d) den ersten Schwellenwert (V_t1) überschreitet, um die Drehzahldifferenz (V_d) zu verringern.

19. Verfahren nach Anspruch 18, umfassend die Schritte:

Bestimmen eines zweiten Schwellenwerts in Abhängigkeit von einer Bestimmung eines Vorlaufverhältnisses;
Bestimmen eines dritten Schwellenwerts in Abhängigkeit von einer Bremslenkaktion;
Bestimmen eines maximalen Schwellenwerts aus dem ersten, zweiten und dritten Schwellenwert und
Festlegen des maximalen Schwellenwerts als aktiven Schwellenwert.

**Revendications**

1. Véhicule (1), comprenant

   un système d'entraînement (11) destiné à générer un couple d'entraînement et à transmettre le couple d'entraînement à un arbre de sortie d'entraînement d'essieu avant (25) et à un arbre de sortie d'entraînement d'essieu arrière (29) ; avec
   un embrayage commandable (30) agencé entre l'arbre de sortie d'entraînement d'essieu avant (25) et l'arbre de sortie d'entraînement d'essieu arrière (29) pour distribuer le couple d'entraînement entre l'arbre de sortie d'entraînement d'essieu avant (25) et l'arbre de sortie d'entraînement d'essieu arrière (29) selon un rapport d'enclenchement d'embrayage ;
   un premier capteur de vitesse (46) destiné à déterminer une vitesse de rotation de l'arbre de sortie d'entraînement d'essieu avant (25) ;
   un second capteur de vitesse (47) destiné à déterminer une vitesse de rotation de l'arbre de sortie d'entraînement d'essieu arrière (29) ; et
   une unité de commande (5) configurée pour déterminer une différence de vitesse (V_d) entre la vitesse de rotation de l'arbre de sortie d'entraînement d'essieu avant (25) et la vitesse de rotation de l'arbre de sortie d'entraînement d'essieu arrière (29) ;
   **caractérisé par**
   une unité de mesure (35) destinée à déterminer une force de traction ; dans lequel
   l'unité de commande (5) est en outre configurée pour déterminer une première valeur seuil (V_t1) sur la base de la force de traction ;
   pour régler la première valeur seuil (V_t1) en tant que valeur seuil active (V_ta) ; et
   pour commander le rapport d'enclenchement d'embrayage de l'embrayage commandable (30) en fonction de la différence de vitesse (V_d) et de la valeur seuil active (V_ta).

2. Véhicule (1) de la revendication 1, dans lequel l'unité de commande (5) est configurée pour normaliser la vitesse de rotation de l'arbre de sortie d'entraînement d'essieu avant ou arrière (25, 29) relativement à un rapport de prépondérance,

   à un angle de braquage ($\alpha$) de roues braquables (13a, 13b) et/ou
   à des dimensions de roues avant et arrière (13a, 13b, 15a, 15b).

3. Véhicule (1) de la revendication 1 ou 2, dans lequel plus la force de traction est élevée, plus la valeur de la première valeur seuil (V_t1) est déterminée être basse par l'unité de commande (5), et vice versa.

4. Véhicule (1) de l'une quelconque des revendications 1 à 3, dans lequel l'unité de commande (5) est configurée pour déterminer la première valeur seuil (V_t1) sur la base de la vitesse de rotation de l'arbre de sortie d'entraînement d'essieu avant (25) ou de l'arbre de sortie d'entraînement d'essieu arrière (29).

5. Véhicule (1) de l'une quelconque des revendications 1 à 4, dans lequel l'unité de commande (5) est configurée

   pour déterminer au moins une valeur seuil supplémentaire (V_t2, V_t3) ; et
   pour régler la valeur seuil supplémentaire en tant que valeur seuil active (V_ta) si la première valeur seuil (V_t1) est inférieure à la valeur seuil supplémentaire (V_t2, V_t3).

6. Véhicule (1) de la revendication 5, dans lequel l'unité de commande (5) est configurée pour déterminer un rapport de prépondérance ; et

   pour déterminer une deuxième valeur seuil (V_t2) comme étant une de l'au moins une valeur seuil supplémentaire si la détermination du rapport de prépondérance est nulle ;
   dans lequel la deuxième valeur seuil (V_t2) est basée sur la vitesse de rotation de l'arbre de sortie d'entraînement d'essieu avant (25) ou de l'arbre de sortie d'entraînement d'essieu arrière (29).

7. Véhicule (1) de la revendication 6, comprenant une unité de frein (55a, 55b, 56a, 56b) ;

   une roue braquable (13a, 13b) ; et
   un capteur de braquage (61) destiné à déterminer un angle de braquage ($\alpha$) de la roue braquable (13a, 13b),

dans lequel l'unité de commande (5) détermine le rapport de prépondérance si

la force de traction est inférieure à un premier paramètre,

l'angle de braquage ($\alpha$) est inférieur à un deuxième paramètre,

l'unité de frein (55a, 55b, 56a, 56b) est relâchée, et/ou le rapport d'enclenchement d'embrayage de l'embrayage commandable (30) est inférieur à un troisième paramètre.

8. Véhicule (1) de la revendication 6 ou 7, dans lequel l'unité de commande (5) est configurée pour déterminer la deuxième valeur seuil (V_t2) comme étant une valeur constante après une détermination valide du rapport de prépondérance.

9. Véhicule (1) de l'une quelconque des revendications 5 à 8, dans lequel l'unité de commande (5) est configurée pour détecter une action de braquage avec freinage ; et pour déterminer une troisième valeur seuil (V_3) comme étant une de l'au moins une valeur seuil supplémentaire en fonction d'une détection d'une action de braquage avec freinage.

10. Véhicule (1) de l'une quelconque des revendications 5 à 9, dans lequel l'unité de commande (5) est configurée

pour déterminer une valeur seuil maximum parmi la première valeur seuil (V_t1) et l'au moins une valeur seuil supplémentaire (V_t2, V_t3) ; et

pour régler la valeur seuil maximum en tant que valeur seuil active (V_ta).

11. Véhicule (1) de l'une quelconque des revendications 1 à 10, dans lequel l'unité de commande (5) est configurée

pour comparer la différence de vitesse (V_d) à la valeur seuil active (V_ta) ; et

pour ajuster le rapport d'enclenchement d'embrayage de l'embrayage commandable (30) pour réduire la différence de vitesse (V_d).

12. Véhicule (1) de la revendication 11, dans lequel l'unité de commande (5) est configurée pour réduire la différence de vitesse (V_d) si la différence de vitesse (V_d) dépasse la valeur seuil active (V_ta).

13. Véhicule (1) de la revendication 11 ou 12, dans lequel l'unité de commande (5) est configurée pour réduire le rapport d'enclenchement d'embrayage si la différence de vitesse (V_d) est inférieure à la valeur seuil active (V_ta).

14. Véhicule (1) de l'une quelconque des revendications 1 à 13, dans lequel l'unité de commande (5) est configurée

pour déterminer un rapport de prépondérance ;

pour détecter une action de braquage avec freinage ; et pour régler la première valeur seuil (V_t1) en tant que valeur seuil active (V_ta) seulement si le rapport de prépondérance a été déterminé de façon valide et une absence d'une action de braquage avec freinage a été détectée.

15. Véhicule (1) de l'une quelconque des revendications 2 à 14, dans lequel la première valeur seuil (V_t1) est égale ou inférieure à 5 % de la vitesse de rotation normalisée de l'arbre de sortie d'entraînement d'essieu avant ou arrière (25, 29).

16. Véhicule (1) de l'une quelconque des revendications 5 à 14, dans lequel l'au moins une valeur seuil supplémentaire (V_t2, V_t3) est supérieure à 5 % d'une vitesse de rotation normalisée de l'arbre de sortie d'entraînement d'essieu avant ou arrière (25, 29).

17. Véhicule (1) de l'une quelconque des revendications précédentes, dans lequel l'unité de mesure (35) est un capteur de pression intégré dans une conduite sous pression d'un circuit hydraulique d'un composant du système d'entraînement (11).

18. Procédé pour commander un rapport d'enclenchement d'embrayage variable d'un premier embrayage commandable (30) d'un véhicule (1), comprenant les étapes :

la détermination d'une valeur de vitesse de rotation d'un arbre de sortie d'entraînement d'essieu avant (25) relié au premier embrayage commandable (30) ;

la détermination d'une valeur de vitesse de rotation d'un arbre de sortie d'entraînement d'essieu arrière (29) relié au premier embrayage commandable (30) ;

la détermination d'une valeur de vitesse de rotation normalisée (V_n29) de l'arbre de sortie d'entraînement d'essieu arrière (29) ;

la détermination d'une différence de vitesse (V_d) entre la valeur de vitesse de rotation de l'arbre de sortie d'entraînement d'essieu avant (25) et la valeur de vitesse de rotation normalisée (V_n29) de l'arbre de sortie d'entraînement d'essieu arrière (29) ;

**caractérisé par**

la détermination d'une force de traction du véhicule (1) ;

la détermination d'une première valeur seuil (V_t1) sur la base de la valeur de vitesse de rotation normalisée (V_29) de l'arbre de sortie d'entraînement d'essieu arrière (29) et de la force de traction ;

la comparaison de la différence de vitesse (V_d) à la première valeur seuil (V_t1) ; et

l'augmentation du rapport d'enclenchement d'embrayage si la différence de vitesse (V_d) dépasse la première valeur seuil (V_t1) pour réduire la différence de vitesse (V_d).

19. Procédé de la revendication 18 comprenant les étapes :

la détermination d'une deuxième valeur seuil en fonction d'une détermination d'un rapport de prépondérance ;

la détermination d'une troisième valeur seuil en fonction d'une action de braquage avec freinage ;

la détermination d'une valeur seuil maximum parmi les première, deuxième, et troisième valeurs seuils, et

le réglage de la valeur seuil maximum en tant que valeur seuil active.

**FIG. 1**

EP 4 572 967 B1

**FIG. 2**

**FIG. 3**

EP 4 572 967 B1

**FIG. 4**

**FIG. 5A**

**FIG. 5B**

**FIG. 5C**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3720076 B1
- EP 3720760 B1
- DE 9204417 U1
- WO 2013053564 A1